(19)

**Europäisches Patentamt**

**European Patent Office**

**Office européen des brevets**

(11) **EP 4 700 287 A1**

(12) **EUROPEAN PATENT APPLICATION**

(43) Date of publication:
25.02.2026 Bulletin 2026/09

(21) Application number: 25192076.5

(22) Date of filing: 28.07.2025

(51) International Patent Classification (IPC):
*F23C 3/00* (2006.01) *F23N 5/02* (2006.01)

(52) Cooperative Patent Classification (CPC):
**F23C 3/002; F23N 5/022;** F23C 2900/03009;
F23C 2900/99001; F23N 2225/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 21.08.2024 US 202418810908

(71) Applicant: Honeywell International Inc.
Charlotte, NC 28202 (US)

(72) Inventors:
• GITZINGER, Heinz-Peter
Charlotte, 28202 (US)
• VELTEN, Marc
Charlotte, 28202 (US)

(74) Representative: Haseltine Lake Kempner LLP
Cheapside House
138 Cheapside
London EC2V 6BJ (GB)

(54) **OPTIMIZED FURNACE BURNER ADJUSTMENT FOR FLAMELESS COMBUSTION**

(57) A furnace heating device comprising one or more radiant tubes that are configured in one or more zones of a furnace chamber; one or more burners that are coupled to the one or more radiant tubes and one or more burner control units; a programmable controller that is configured to determine one or more estimated radiant tube temperatures that respectively correspond to the one or more radiant tubes, generate one or more control signals based on the one or more estimated radiant tube temperatures with respect to a threshold temperature, wherein the one or more control signals instruct the one or more burners to operate in a flame combustion operation or a flameless combustion operation, and provide the one or more control signals to the one or more burner control units to enable flameless combustion at furnace chamber temperatures that are below a minimum temperature for flameless combustion.

FIG. 1

EP 4 700 287 A1

## Description

### TECHNICAL FIELD

Various embodiments of the present disclosure relate to furnaces, and more particularly to optimizing flameless combustion operation of furnace burners for reducing emissions.

### BACKGROUND

The need to minimize the formation of oxides of nitrogen during combustion has become a requirement of many applications, such as furnaces. For example, industrial furnaces may employ burners with flameless combustion. An advantage of flameless combustion compared to flame combustion is significantly reduced nitrogen oxides emissions. At lower temperatures, radiant tubes may be heated with flame combustion and switched to flameless combustion heating when a minimum temperature (e.g., approximately 850°C or 1562°F) is reached. Conventional furnaces may require a furnace operating temperature of at least approximately 850°C or 1562°F to ensure that the radiant tubes are at a sufficient temperature to operate a burner with flameless combustion. However, during combustion operation, the temperatures inside the radiant tubes may be higher than the furnace chamber temperature. As such, conventional furnaces may operate burners with flame combustion for longer than needed to achieve a required temperature in the radiant tubes for flameless combustion. Furthermore, it may be prohibitively expensive to measure temperatures of each radiant tube.

Applicant has identified many technical challenges and difficulties associated with operating furnace burners with flameless combustion.

### BRIEF SUMMARY

Various embodiments described herein relate to components, apparatuses, and systems for operating burners in furnaces.

In accordance with various embodiments of the present disclosure, a furnace heating device is provided. In some embodiments, the furnace heating device comprises a furnace chamber comprising one or more zones; one or more radiant tubes that are configured in the one or more zones; one or more burners that are coupled to the one or more radiant tubes; one or more burner control units that are communicatively coupled to the one or more burners; and a programmable controller that is communicatively coupled to the one or more burner control units, wherein the programmable controller is configured to determine one or more estimated radiant tube temperatures that respectively correspond to the one or more radiant tubes based on (i) a furnace chamber temperature signal that is representative of a furnace chamber temperature and (ii) one or more furnace and burner parameters that respectively correspond to the one or more radiant tubes, generate one or more control signals based on the one or more estimated radiant tube temperatures with respect to a threshold temperature, wherein the one or more control signals instruct the one or more burners to operate in a flame combustion operation or a flameless combustion operation, and provide the one or more control signals to the one or more burner control units.

In some embodiments, the furnace heating device further comprises a furnace chamber thermocouple that is configured to measure the furnace chamber temperature; generate the furnace chamber temperature signal based on the furnace chamber temperature; and provide the furnace chamber temperature signal to the programmable controller. In some embodiments, the furnace heating device further comprises a control thermocouple that is configured to measure a temperature of a given radiant tube of the one or more radiant tubes; and generate a control signal based on the temperature of the given radiant tube. In some embodiments, the programmable controller is further configured to determine the one or more estimated radiant tube temperatures based on the control signal. In some embodiments, the programmable controller is further configured to determine that the one or more estimated radiant tube temperatures are greater than or equal to a threshold temperature; and generate the one or more control signals for operating the one or more burners in the flameless combustion operation based on the one or more estimated radiant tube temperatures are greater than or equal to the threshold temperature. In some embodiments, the programmable controller is further configured to determine that the one or more estimated radiant tube temperatures are less than a threshold temperature; and generate the one or more control signals for operating the one or more burners in the flame combustion operation based on the one or more estimated radiant tube temperatures are less than the threshold temperature. In some embodiments, the one or more furnace and burner parameters comprise (i) a measured temperature of the furnace chamber, (ii) geometry and material construction of the one or more radiant tubes, (ii) capacity and adjusted excess air of the one or more burners, (iii) arrangement of the one or more radiant tubes in the furnace chamber and relatively to a material heated in the furnace chamber, or (v) a calculated temperature of the material. In some embodiments, the one or more burners comprise a plurality of recuperator burners that are configured to operate with high air preheating.

According to another embodiment, a computer-implemented method is provided. In some embodiments, the computer-implemented method comprises determining, by one or more processors, an estimated radiant tube temperature of a radiant tube based on a plurality of furnace and burner parameters; monitoring, by the one or more processors, the estimated radiant tube temperature with respect to a threshold temperature; generating, by the one or more processors, one or more first control signals that are associated with flame combustion operation based on the estimated radiant tube temperature being less than the threshold temperature; and generating, by the one or more processors, one or more second control signals that are associated with flameless combustion operation based on the estimated radiant tube temperature being equal to or greater than the threshold temperature.

In some embodiments, the estimated radiant tube temperature comprises a representative temperature of a given radiant tube of a plurality of radiant tubes. In some embodiments, the plurality of furnace and burner parameters are associated with radiant tube surface, radiant tube mass, furnace room temperature, or current burner capacity. In some embodiments, determining the estimated radiant tube temperature further comprises determining a net burner capacity and a radiative heat transfer from a radiant tube. In some embodiments, the computer-implemented method further comprises modifying the estimated radiant tube temperature based on a control radiant tube temperature. In some embodiments, the computer-implemented method further comprises generating, based on the control radiant tube temperature, training data that are used to train or modify machine learning model parameters. In some embodiments, the computer-implemented method further comprises providing the one or more first control signals and the one or more second control signals to one or more burner control units. In some embodiments, determining the estimated radiant tube temperature further comprises determining a flame operation with a minimum operating time.

According to another embodiment, one or more non-transitory computer-readable storage media is provided. In some embodiments, the one or more non-transitory computer-readable storage media includes instructions that, when executed by one or more processors, cause the one or more processors to determine an estimated radiant tube temperature based on a plurality of furnace and burner parameters; monitor the estimated radiant tube temperature with respect to a threshold temperature; generate one or more first control signals based on the estimated radiant tube temperature being less than the threshold temperature; and generate one or more second control signals based on the estimated radiant tube temperature being equal to or greater than the threshold temperature.

In some embodiments, the estimated radiant tube temperature comprises a representative temperature of a given radiant tube of a plurality of radiant tubes. In some embodiments, the plurality of furnace and burner parameters are associated with radiant tube surface, radiant tube mass, furnace room temperature, or current burner capacity. In some embodiments, the one or more non-transitory computer-readable storage media further includes instructions that, when executed by the one or more processors, cause the one or more processors to determine the estimated radiant tube temperature further comprises determining a net burner capacity and a radiative heat transfer from a radiant tube. In some embodiments, the one or more non-transitory computer-readable storage media further includes instructions that, when executed by the one or more processors, cause the one or more processors to modify the estimated radiant tube temperature based on a control radiant tube temperature.

The foregoing illustrative summary, as well as other exemplary objectives and/or advantages of the disclosure, and the manner in which the same are accomplished, are further explained in the following detailed description and its accompanying drawings.

**BRIEF DESCRIPTION OF THE DRAWINGS**

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:

FIG. 1 is a diagram of at least a portion of an example furnace heating device in accordance with some embodiments of the present disclosure;
FIG. 2 provides an example computing entity in accordance with some embodiments of the present disclosure;
FIG. 3 is a flow diagram illustrating an example process for operating burners in a furnace in accordance with some example embodiments of the present disclosure;
FIG. 4 is a diagram of example radiant tube components in accordance with some embodiments of the present disclosure; and
FIG. 5 is a chart of an example radiant tube heating curve for a furnace in accordance with some embodiments of the present disclosure.

## DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc., are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As described above, there are many technical challenges and difficulties associated with conventional furnaces. For example, burners in a conventional furnace may be maintained in flame operation for heating radiant tubes until a measured temperature of a furnace chamber or zone of a furnace chamber reaches a minimum temperature (e.g., approximately 850°C / 1562°F) before switching to flameless combustion operation to reduce nitrogen oxides emissions. That is, the minimum temperature may be associated with a temperature of the radiant tubes for reliably operating the burners with flameless combustion. However, the radiant tubes may obtain the minimum temperature sooner than the furnace chamber given that the burners are directly heating the radiant tubes rather than the furnace chamber which is indirectly heated by the radiant tubes. As such, the burners may be operated with flame combustion for longer than needed thereby heating the radiant tubes to a temperature that is higher than a minimum temperature for operating with flameless combustion and producing unnecessary nitrogen oxides emissions as a result.

Various example embodiments of the present disclosure overcome such technical challenges and difficulties in furnaces and provide various technical advancements and improvements. In accordance with various embodiments of the present disclosure, components of example furnace components for improving furnace emissions performance are disclosed. In this regard, a furnace comprising burners that heat radiant tubes may be operated with flameless combustion based on calculated temperatures of the radiant tubes rather than measured furnace chamber to provide flameless combustion operation at lower furnace chamber temperatures. In particular, some example embodiments of the present disclosure may provide operation of industrial furnaces using flameless combustion in a medium furnace chamber temperature range (e.g., approximately 750°C-850°C / 1382°F - 1562°F). This seemingly narrow temperature range may be responsible for the highest emission values that occur during furnace operation.

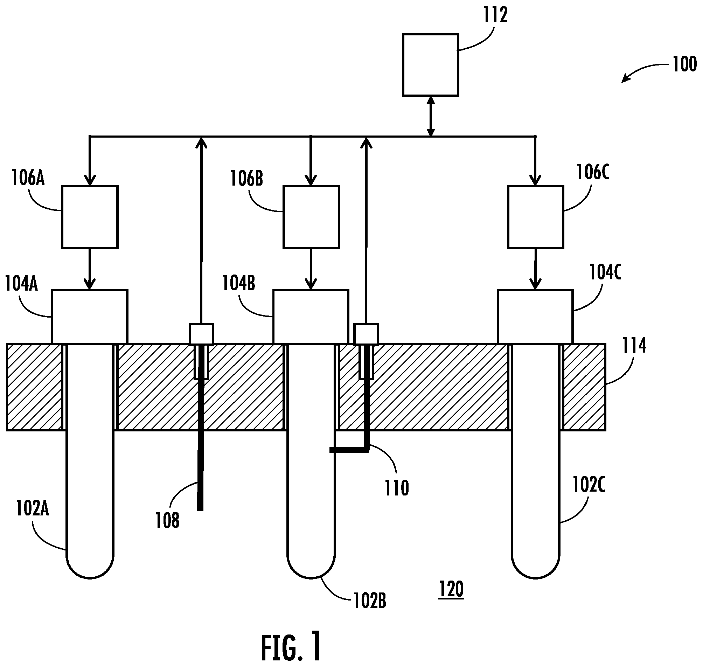

FIG. 1 is a diagram of at least a portion of an example furnace heating device 100 in accordance with some embodiments of the present disclosure. The furnace heating device 100 may comprise a device for providing heat treatment of materials in a furnace chamber 120. As depicted in FIG. 1, the furnace heating device 100 comprises a plurality of burners 104A, 104B, and 104C that are coupled to a respective plurality of radiant tubes 102A, 102B, and 102C. The plurality of radiant tubes 102A, 102B, and 102C may be configured in one or more zones of the furnace heating device 100. The plurality of radiant tubes 102A, 102B, and 102C may comprise combustion chambers for the plurality of burners 104A, 104B, and 104C. As such, the plurality of burners 104A, 104B, and 104C may directly heat the plurality of radiant tubes 102A, 102B, and 102C and in turn, the plurality of radiant tubes 102A, 102B, and 102C may provide indirect heating to (e.g., one or more zones of) the furnace chamber 120 by dissipating heat that is provided by the plurality of burners 104A, 104B, and 104C. The plurality of radiant tubes 102A, 102B, and 102C may be configured within specific zones of a furnace chamber 120 by insertion through appropriate apertures in a furnace wall 114 to provide radiant heat to the furnace chamber 120.

The plurality of burners 104A, 104B, and 104C may be fuel-operated (e.g., gas) for heating the plurality of radiant tubes 102A, 102B, and 102C with either flame combustion or flameless combustion. In some embodiments, flameless combustion may refer to spontaneous ignition of a fuel that is oxidized with preheated air and does not exhibit visual or audial signs of flames typically associated with burning. In some embodiments, the plurality of burners 104A, 104B, and 104C comprise recuperator burners that are configured to operate with high air preheating to create flameless combustion. In some embodiments, operation of the plurality of burners 104A, 104B, and 104C with flameless combustion is characterized by particularly low levels of nitrogen oxides emissions. As disclosed herewith, it may be desirable to operate the plurality of burners 104A, 104B, and 104C with flameless combustion rather than flame combustion as the resultant nitrogen oxides in the waste gas produced by the plurality of burners 104A, 104B, and 104C are much higher with flame combustion than with flameless combustion.

A plurality of burner control units 106A, 106B, and 106C may be communicatively coupled to the plurality of burners 104A, 104B, and 104C for controlling on and off states and for switching from flame combustion operation to flameless combustion operation of the plurality of burners 104A, 104B, and 104C. In some alternative embodiments, the plurality of burners 104A, 104B, and 104C may be communicatively coupled to a single burner control unit rather than the plurality of burner control units 106A, 106B, and 106C. The furnace heating device 100 further comprises a programmable controller 112 that is communicatively coupled to the furnace chamber thermocouple 108 and the plurality of burner control units 106A, 106B, and 106C (or a single burner control unit). The furnace chamber thermocouple 108 may comprise a sensor that is configured to measure a temperature of the furnace chamber 120 and generate a signal that is representative of the furnace chamber temperature. The furnace heating device 100 further comprises a control thermocouple 110 that is configured to measure a temperature of the radiant tube 102B and generate a signal that is representative of the temperature of the radiant tube 102B. The configuration of the control thermocouple 110 as depicted in FIG. 1 is merely exemplary and the control thermocouple 110 may be configured to measure any one of the plurality of radiant tubes 102A, 102B, and 102C.

In some embodiments, the programmable controller 112 may configure operation (on/off or flame/flameless combustion) of the plurality of burners 104A, 104B, and 104C by (i) determining estimated radiant tube temperatures of the radiant tubes 102A, 102B, or 102C based on (a) a measured temperature of the furnace chamber 120 based on signals received from the furnace chamber thermocouple 108, and optionally, a measured temperature of the radiant tube 102B based on signals from the control thermocouple 110 and (b) furnace and burner parameters, as disclosed herewith, (ii) generating control signals (e.g., associated with on/off or flame/flameless combustion) based on the estimated radiant tube temperature, and (iii) providing the control signals to the plurality of burner control units 106A, 106B, and 106C. According to various embodiments of the present disclosure, it is desirable to control operation of the plurality of burners 104A, 104B, and 104C without a thermocouple on each of the plurality of radiant tubes 102A, 102B, and 102C. In some embodiments, signals from the control thermocouple 110 may be used to correct or tune the estimated radiant tube temperature.

In some embodiments, the plurality of burners 104A, 104B, and 104C is operated (e.g., flame combustion or flameless combustion) by the programmable controller 112 based on estimated radiant tube temperatures that are calculated rather than measured. In some embodiments, the plurality of burners 104A, 104B, and 104C may be started by the programmable controller 112 in flame combustion operation if the calculated radiant tube temperature is below a threshold temperature. In some embodiments, the plurality of burners 104A, 104B, and 104C may heat the plurality of radiant tubes 102A, 102B, and 102C with flame combustion until the calculated radiant tube temperature is equal to or greater than the threshold temperature at which the plurality of burners 104A, 104B, and 104C may be switched by the programmable controller 112 to flameless combustion operation. According to various embodiments of the present disclosure, switching from flame (combustion) operation to flameless (combustion) operation of the plurality of burners 104A, 104B, and 104C is enabled by calculating a radiant tube temperature as a function of one or more furnace and burner parameters. In some embodiments, the one or more furnace and burner parameters comprise (i) a measured temperature of the furnace chamber 120, (ii) geometry and material construction of the plurality of radiant tubes 102A, 102B, and 102C, (ii) capacity and adjusted excess air of the plurality of burners 104A, 104B, and 104C, (iii) arrangement of the plurality of radiant tubes 102A, 102B, and 102C in the furnace chamber 120 and relatively to a material heated in the furnace chamber 120, or (v) a calculated temperature of the material heated in the furnace chamber.

In some embodiments, the calculated radiant tube temperature may be representative of a given radiant tube or a set of radiant tubes (e.g., comprising substantially similar properties or configurations, such as components, location, boundary conditions, or on/off times) of radiant tubes 102A, 102B, and 102C. As previously described, temperatures of the plurality of radiant tubes 102A, 102B, and 102C may reach 850°C or 1562°F faster than a temperature of the furnace chamber 120. However, it may be prohibitively expensive or unfeasible to measure temperatures of the plurality of radiant tubes 102A, 102B, and 102C. With calculated radiant tube temperatures, the plurality of burners 104A, 104B, and 104C may be started in flameless combustion operation at furnace chamber temperatures that are below 850°C or 1562°F thereby optimizing (e.g., less nitrogen oxides emission) heating of the plurality of radiant tubes 102A, 102B, and 102C.

In some embodiments, the calculated radiant tube temperature is compared with a measured temperature of radiant tube 102B (via control thermocouple 110). In some embodiments, the measured temperature is used to correct and/or tune the calculated radiant tube temperature. In some embodiments, a machine learning model is trained to calculate and/or optimize the calculated radiant tube temperature based on the measured temperature.

Embodiments of the present disclosure may be implemented in various ways, including as computer program products that comprise articles of manufacture. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

A non-volatile computer-readable storage medium may include a floppy disk, flexible disk, hard disk, solid-state storage (SSS) (e.g., a solid-state drive (SSD), solid-state card (SSC), solid-state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

A volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may also take the form of an entirely hardware embodiment, an entirely computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically configured machines performing the steps or operations specified in the block diagrams and flowchart illustrations. Accordingly, the block diagrams and flowchart illustrations support various combinations of embodiments for performing the specified instructions, operations, or steps.

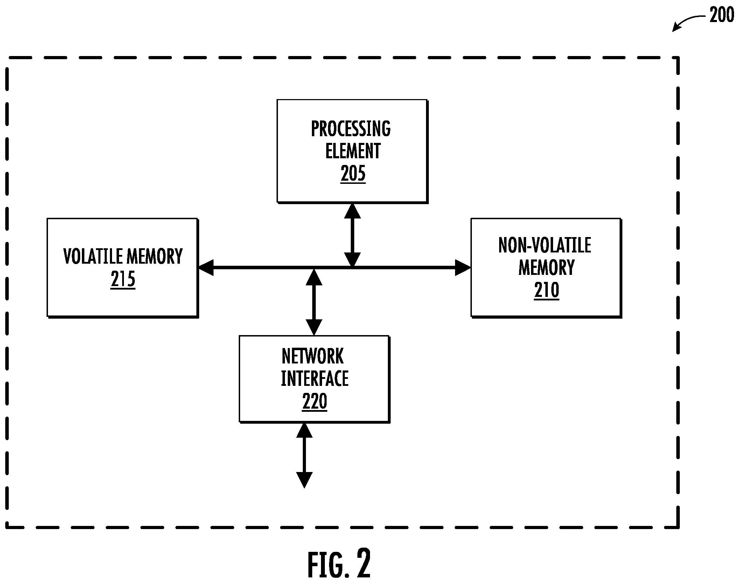

FIG. 2 provides an example computing entity 200 in accordance with some embodiments of the present disclosure. The computing entity 200 is an example of the programmable controller 112 of FIG. 1. In general, the terms computing entity, computer, entity, device, system, and/or similar words used herein interchangeably may refer to, for example, one or more computers, computing entities, desktops, mobile phones, tablets, phablets, notebooks, laptops, distributed systems, kiosks, input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, training one or more machine learning models, monitoring, evaluating, comparing, and/or similar terms used herein interchangeably. In some embodiments, these functions, operations, and/or processes may be performed on data, content, information, and/or similar terms used herein interchangeably. In some embodiments, the one computing entity (e.g., programmable controller 112, etc.) may train and use one or more machine learning models described herein. In other embodiments, a first computing entity (e.g., programmable controller 112, etc.) may use one or more machine learning models that may be trained by a second computing entity communicatively coupled to the first computing entity. The second computing entity, for example, may train one or more of the machine learning models described herein, and subsequently provide the trained machine learning model(s) (e.g., optimized parameters, weights, code sets, etc.) to the first computing entity over a network.

As shown in FIG. 2, in some embodiments, the computing entity 200 may include, or be in communication with, one or more processing elements 205 (also referred to as processor(s), processing circuitry, and/or similar terms used herein interchangeably) that communicate with other elements within the computing entity 200 via a bus, for example. As will be understood, the processing elements 205 may be embodied in a number of different ways.

For example, the processing elements 205 may be embodied as one or more complex programmable logic devices (CPLDs), microprocessors, multi-core processors, coprocessing entities, application-specific instruction-set processors (ASIPs), microcontrollers, and/or controllers. Further, the processing elements 205 may be embodied as one or more other processing devices or circuitry. The term circuitry may refer to an entirely hardware embodiment or a combination of hardware and computer program products. Thus, the processing elements 205 may be embodied as integrated circuits, application specific integrated circuits (ASICs), field programmable gate arrays (FPGAs), programmable logic arrays (PLAs), hardware accelerators, other circuitry, and/or the like.

As will therefore be understood, the processing elements 205 may be configured for a particular use or configured to execute instructions stored in volatile or non-volatile media or otherwise accessible to the processing elements 205. As such, whether configured by hardware or computer program products, or by a combination thereof, the processing elements 205 may be capable of performing steps or operations according to embodiments of the present disclosure when configured accordingly.

In some embodiments, the computing entity 200 may further include, or be in communication with, non-volatile media (also referred to as non-volatile storage, memory, memory storage, memory circuitry, and/or similar terms used herein interchangeably). In some embodiments, the non-volatile media may include one or more non-volatile memory 210, including, but not limited to, hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like.

As will be recognized, the non-volatile media may store databases, database instances, database management systems, data, applications, programs, program modules, scripts, code (e.g., source code, object code, byte code, compiled code, interpreted code, machine code, etc.) that embodies one or more machine learning models or other computer functions described herein, executable instructions, and/or the like. The term database, database instance, database management system, and/or similar terms used herein interchangeably may refer to a collection of records or data that is stored in a computer-readable storage medium using one or more database models, such as a hierarchical database model, network model, relational model, entity-relationship model, object model, document model, semantic model, graph model, and/or the like.

In some embodiments, the computing entity 200 may further include, or be in communication with, volatile media (also referred to as volatile storage, memory, memory storage, memory circuitry, and/or similar terms used herein interchangeably). In some embodiments, the volatile media may also include one or more volatile memory 215, including, but not limited to, RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like.

As will be recognized, the volatile storage or memory media may be used to store at least portions of the databases, database instances, database management systems, data, applications, programs, program modules, scripts, code (e.g., source code, object code, byte code, compiled code, interpreted code, machine code, etc.) that embodies one or more machine learning models or other computer functions described herein, executable instructions, and/or the like being executed by, for example, the processing elements 205. Thus, the databases, database instances, database management systems, data, applications, programs, program modules, scripts, code (e.g., source code, object code, byte code, compiled code, interpreted code, machine code, etc.) that embodies one or more machine learning models or other computer functions described herein, executable instructions, and/or the like may be used to control certain aspects of the operation of the computing entity 200 with the assistance of the processing elements 205 and operating system.

As indicated, in some embodiments, the computing entity 200 may also include one or more network interfaces 220 for communicating with various computing entities, such as by communicating data, code, content, information, and/or similar terms used herein interchangeably that may be transmitted, received, operated on, processed, displayed, stored, and/or the like. Such communication may be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. In some embodiments, the computing entity 200 communicates with another computing entity for uploading or downloading data or code (e.g., data or code that embodies or is otherwise associated with one or more machine learning models). Similarly, the computing entity 200 may be configured to communicate via wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol.

Although not shown, the computing entity 200 may include, or be in communication with, one or more input elements, such as a keyboard input, a mouse input, a touch screen/display input, motion input, movement input, audio input, pointing device input, joystick input, keypad input, and/or the like. The computing entity 200 may also include, or be in communication with, one or more output elements (not shown), such as audio output, video output, screen/display output, motion output, movement output, and/or the like.

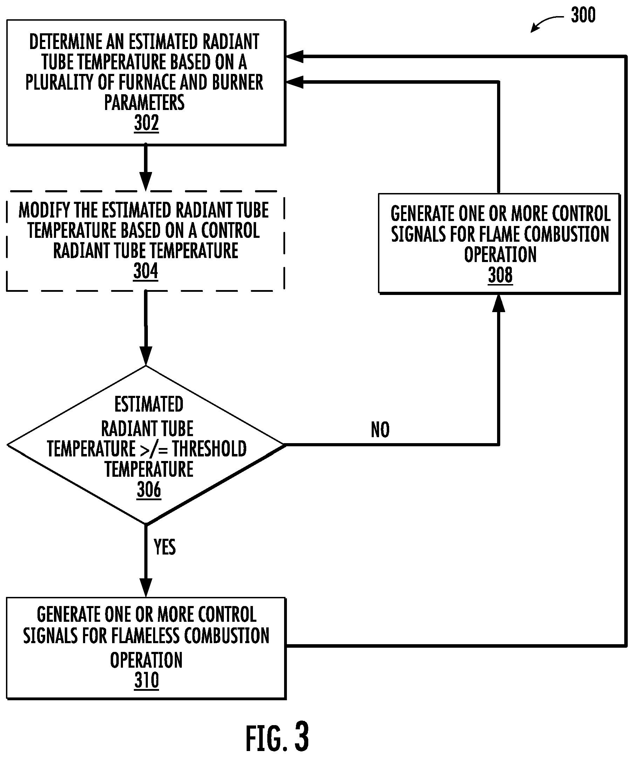

Referring now to FIG. 3, is a flow diagram illustrating an example process 300 for operating burners in a furnace in accordance with some example embodiments of the present disclosure. It is noted that each block of a flowchart, and combinations of blocks in the flowchart, may be implemented by various means such as hardware, firmware, circuitry, and/or other devices associated with execution of software including one or more computer program instructions. For example, one or more of the steps/operations described in FIG. 3 may be embodied by computer program instructions, which may be stored by a non-transitory memory of an apparatus employing an embodiment of the present disclosure and executed by a processor component in an apparatus (such as, but not limited to, computing entity 200). For example, these computer program instructions may direct the processor component to function in a particular manner, such that the instructions stored in the computer-readable storage memory produce an article of manufacture, the execution of which implements the function specified in the flowchart block(s).

In some embodiments, the process 300 begins at step/operation 302 when the computing entity 200 determines an estimated radiant tube temperature of at least one radiant tube of a plurality of radiant tubes based on a plurality of furnace and burner parameters. The estimated radiant tube temperature may comprise a representative temperature of one or more specific radiant tubes from a plurality of radiant tubes that are configured in one or more zones of a furnace. That is, the temperatures of the plurality of radiant tubes may be calculated instead of directly measuring each of the radiant tubes. As such, determining the estimated radiant tube temperature precludes direct temperature measurement of the at least one radiant tube. Accordingly, a plurality of estimated radiant tube temperatures that respectively correspond to a plurality of radiant tubes in a furnace may be determined without the need for sensors configured with each of the plurality of radiant tubes.

In some embodiments, determining the estimated radiant tube temperature further comprises initializing the estimated radiant tube temperature to a furnace chamber temperature. The estimated radiant tube temperature may be initialized upon a restart or error condition. A furnace chamber temperature may comprise a lowest possible temperature for a radiant tube such that an inflated estimate of the radiant tube temperature may be avoided and thereby preventing uncertain states. For example, due to safety considerations, the estimated radiant tube temperature may be recalculated at regular intervals (e.g. once a day or per week) with new initial conditions (e.g., setting the radiant tube temperature to equal the furnace chamber temperature).

The temperature of a radiant tube may vary over time and may be influenced by the temperature of the furnace chamber and the capacity of a burner coupled to the radiant tube. According to various embodiments of the present disclosure, the plurality of furnace and burner parameters comprises influencing parameters for heat transfer, such as radiant tube surface, radiant tube mass, furnace room temperature, or current burner capacity. In some embodiments, specific radiant tube temperatures may be determined for specific radiant tube models or components to account for variances (e.g., location, material, size) of the radiant tubes in the furnace. In some embodiments, a machine learning model may be used to determine the estimated radiant tube temperature. For example, a supervised machine learning model may be trained with furnace and burner parameter values for associated radiant tube temperatures.

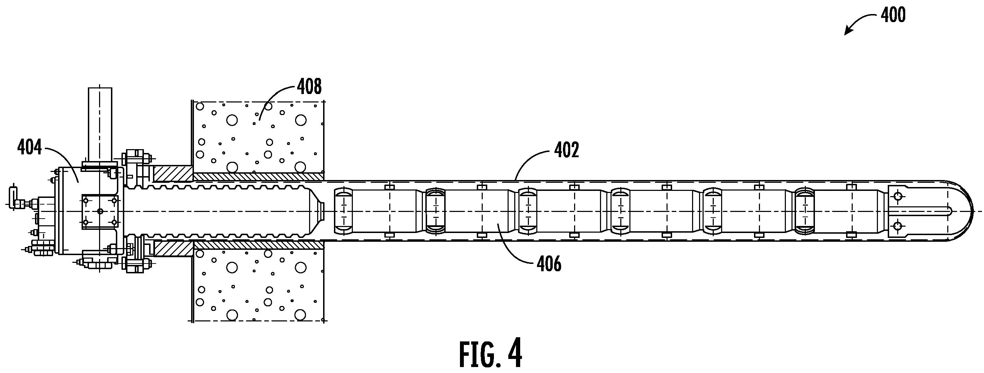

FIG. 4 is a diagram of example radiant tube components 400 in accordance with some embodiments of the present disclosure. Radiant tube components 400 comprise a radiant tube burner 404 that is coupled to an outer radiant tube 402. At least a portion of the outer radiant tube 402 may be inserted through an aperture in a furnace wall 408 and into a furnace chamber. The radiant tube components 400 further comprise an internal flame tube 406 that is configured within an inner cavity of the outer radiant tube 402. The inner flame tube 406 may further comprise one or more individual tubular elements. For example, an additional inner element within the inner cavity of the outer radiant tube 402 may comprise a spacer that prevents the inner flame tube 406 from shifting within the outer radiant tube 402 and to ensure a clear path for the flow of flue gas.

Table 1 provides example furnace and burner parameters.

**Table 1**

| | |
|---|---|
| furnace | $f$ |
| chamber / zone furnace temperature in Kelvin | $T_f$ |
| view factor tube-furnace | $F_{tf}$ |
| inner furnace surface area | $A_f$ |
| inner furnace surface emissivity | $e_f$ |
| material that is heated in the furnace | $m$ |
| material temperature in Kelvin | $T_m$ |
| view factor tube-material | $F_{tm}$ |
| outer material surface area | $A_m$ |
| outer material surface emissivity | $e_m$ |
| furnace components (e.g., transport rollers, oven chamber partition wall) a / b / c temperature in Kelvin | $T_a/T_b/T_c$ |
| view factor tube-furnace component a / b / c | $F_{ta}/F_{tb}/F_{tc}$ |
| view factor furnace component a / b / c - tube | $F_{at}/F_{bt}/F_{ct}$ |
| Furnace component a / b / c surface emissivity | $e_a/e_b/e_c$ |
| radiant tube | $t$ |
| radiant tube outer diameter | $D$ |
| radiant tube heated length | $L$ |
| radiant tube heated surface area | $A_t$ |
| radiant tube surface emissivity | $e_t$ |
| radiant tube medium surface temperature in Kelvin | $T_t$ |
| radiant tube mass (part of heated length) | $m_t$ |
| radiant tube specific heat capacity | $c_t$ |

(continued)

| | |
|---|---|
| radiative heat transfer from radiant tube | $Q_t$ |
| inner flame tube | $i$ |
| inner flame tube mass | $m_i$ |
| inner flame tube specific heat capacity | $c_i$ |
| radiant tube component x / y / z mass | $m_x/m_y/m_{z\,i}$ |
| radiant tube component x / y / z specific heat capacity | $c_x/c_y/c_z$ |
| gross burner gas capacity | $P_g$ |
| burner efficiency (e.g., given value by burner manufacturer; depending on burner gas capacity, excess air, radiant tube geometry, furnace or radiant tube temperature; alternatively calculated based on burner flue gas temperature, flue gas oxygen concentration and fuel gas values) | eta |
| net burner capacity = heat input to radiant tube | $P_n$ |
| mathematical constant Pi | $\pi$ |
| Stefan-Boltzmann constant | $o$ |
| time step, index | $n$ |
| next time step | $n+1$ |

The radiant tube heated surface area $A_t$ may be calculated by:

$$A_t = \pi \times D \times L$$

## __Equation 1__

In some embodiments, determining the estimated radiant tube temperature comprises determining net burner capacity $P_n$ and radiative heat transfer from radiant tube $Q_t$ to obtain radiant tube medium surface tube temperature $T_t$ for a next time step (n+1) according to the following:

$$P_n = P_g \times eta$$

## __Equation 2__

$$Q_t = A_t \times e_t \times o \left[ \frac{e_f \times F_{tf}\; x\; (Tt^4 - Tf^4)}{\left(1 - (1 - e_t) \times (1 - e_f) \times F_{tf} \times F_{ft}\right)} \right.$$

$$+ \frac{e_m \times F_{tm}\; x\; (Tt^4 - Tm^4)}{\left(1 - (1 - e_t) \times (1 - e_m) \times F_{tm} \times F_{mt}\right)}$$

$$+ \frac{e_a \times F_{ta}\; x\; (Tt^4 - Ta^4)}{\left(1 - (1 - e_t) \times (1 - e_a) \times F_{ta} \times F_{at}\right)}$$

$$+ \frac{e_b \times F_{tb}\; x\; (Tt^4 - Tb^4)}{\left(1 - (1 - e_t) \times (1 - e_b) \times F_{tb} \times F_{bt}\right)}$$

$$\left. + \frac{e_c \times F_{tc}\; x\; (Tt^4 - Tc^4)}{\left(1 - (1 - e_t) \times (1 - e_c) \times F_{tc} \times F_{ct}\right)} \right]$$

## __Equation 3__

$$T_t(n+1) = Tt(n) + \frac{P_n(n) - Q_t(n)}{(m_t \times c_t) + (m_i \times c_i) + (m_x \times c_x) + (m_y \times c_y) + (m_z \times c_z)}$$

**Equation 4**

In some embodiments, a determination of $Q_t$ may be simplified if the following conditions are satisfied: (i) the furnace chamber is significantly larger in comparison to radiant tubes within the furnace chamber, (ii) a large distance exists between the radiant tubes and a material heated inside the furnace chamber, and (iii) the temperature of the material is close to the furnace chamber temperature. For example, if $A_t << A_f$ and $A_m << A_f$ and $T_m \approx T_f$:

$$Q_t = A_t \times e_t \times o \times (T_t^4 - T_f^4)$$

**Equation 5**

Referring back to FIG. 3, in some embodiments, subsequent to step/operation 302, at optional step/operation 304, the computing entity 200 modifies the estimated radiant tube temperature based on a control radiant tube temperature. For example, one (or more) of a plurality of radiant tubes may comprise a thermocouple that may be configured to measure an actual temperature of the one (or more) radiant tube to provide a control radiant tube temperature for comparison with the estimated radiant tube temperature. In some embodiments, the control radiant tube temperature may be used to correct or tune the estimated radiant tube temperature. For example, the estimated radiant tube temperature may be re-calculated by applying a statistical function based on the control radiant tube temperature or replaced with the control radiant tube temperature. In some embodiments, the control radiant tube temperature may be used as training data to train or modify (e.g., fine-tune) machine learning model parameters.

In some embodiments, subsequent to step/operation 302 (or 304), the process proceeds to step/operation 306, where the computing entity 200 monitors for an estimated radiant tube temperature that is greater than or equal to a threshold temperature. The threshold temperature may comprise a minimum temperature of a radiant tube for operating a burner with flameless combustion in the radiant tube. In some embodiments, the threshold temperature comprises 1562°F.

According to various embodiments of the present disclosure, the computing entity 200 monitors the estimated radiant tube temperature rather than the furnace chamber temperature for determining burner operation, which provides several advantages. As disclosed herewith, determining the furnace chamber temperature alone may not provide an accurate indication of a temperature of a radiant tube. That is, a furnace chamber is provided with indirect heat that is dissipated from a radiant tube. As such, the temperature of the radiant tube may be much higher than that of the furnace chamber when the radiant tube is heated by a burner. Furthermore, due to certain construction or limitations of a furnace, the furnace chamber may not exceed a given threshold temperature that is sufficient for flameless combustion, whereas radiant tubes that provide heat to the furnace chamber may be capable of obtaining the given threshold temperature.

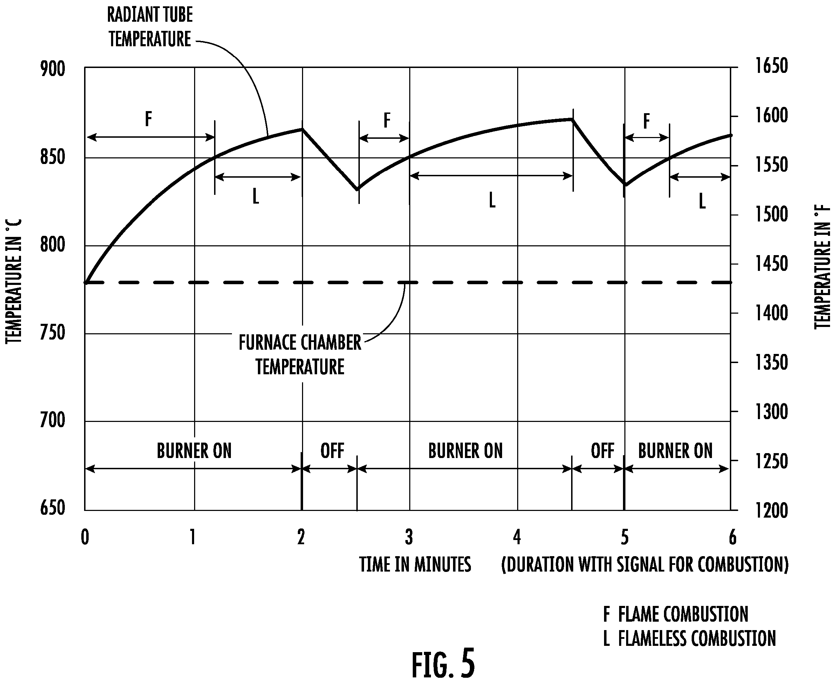

FIG. 5 is a chart of an example radiant tube heating curve for a furnace in accordance with some embodiments of the present disclosure. A temperature of a radiant tube (e.g., estimated radiant tube temperature) in a furnace chamber is depicted during on and off switched heating by a burner. As depicted, at time (minute) 0, a radiant tube comprises a temperature of approximately 780°C / 1436° due to non-operation or switching off for a period of time. A burner control system (e.g., comprising one or more burner control units that are communicatively coupled to one or more burners) may be configured to generate one or more control signals to start flame operation of a burner that is coupled to the radiant tube to cause the radiant tube temperature to rise. A rate at which the temperature of the radiant tube rises may be based on burner power and boundary conditions of the radiant tube and the furnace chamber. The furnace chamber temperature is constant at 780°C / 1436°F.

Approximately after 1.2 minutes of burner operation, the radiant tube temperature exceeds a threshold temperature of 850°C / 1562°F (e.g., a minimum temperature for flameless combustion). Upon the radiant tube temperature exceeding or reaching the threshold temperature, the burner control system may generate one or more control signals to switch operation of the burner from flame operation to flameless combustion operation. In the depicted embodiment, the burner is switched off at minute 2. When the burner is switched off, no signal for flame or flameless combustion may be needed. The radiant tube temperature may decrease during burner off time (e.g., due to heat radiation from the radiant tube and no energy supply through the burner). According to the depicted embodiment, the burner is restarted in flame operation after 30 seconds (minute 2.5). Subsequently, the burner control system may switch the burner operation again from flame operation to flameless combustion operation when the calculated radiant tube temperature exceeds or reaches the threshold temperature. As such, a large proportion of the burner operating time takes place with the boundary condition of a radiant tube temperature above the limit temperature of 850°C / 1562°F and a significant reduction in emissions may be achieved over a significant proportion of furnace operation time. Accordingly, determining an estimated radiant tube temperature may allow for flameless combustion that may not be possible with monitoring furnace chamber temperature alone, as depicted by FIG. 5.

Referring back to FIG. 3, in some embodiments, subsequent to step/operation 306, if the estimated radiant tube temperature is not greater than or equal to the threshold temperature, the processor proceeds to step/operation 308, where the computing entity 200 generates one or more control signals for flame combustion operation. The one or more control signals may be provided to one or more burners (e.g., via one or more burner control units) that are coupled to one or more radiant tubes and provide fuel-operated heating within the one or more radiant tubes. As such, the one or more control signals may cause the one or more burners to operate with flame combustion.

In some embodiments, subsequent to step/operation 308, the computing entity 200 may continue to monitor the estimated radiant tube temperature (e.g., repeat steps/operations 302 through 306). In some embodiments, at step/operation 302 subsequent to step/operation 308, to determine an estimated radiant tube temperature, the computing entity 200 determines flame operation with a minimum operating time after a previous cooling operation of a burner after the burner has been turned off (e.g., safe start-up of a cooled radiant tube burner at high temperature operation).

A cooling operation of a burner may comprise circulating the burner with cool air without fuel and without flame. As such, the surface temperature of a radiant tube that is coupled to the burner may remain warmer than inside components of the radiant tube. Using the surface temperature of the radiant tube as a criterion for determining a mode of operation of the burner in a subsequent heating operation with flame combustion or with flameless combustion may lead to a critical operating condition with flameless operation at a sufficiently high radiant tube surface temperature but too low temperature of the internal components inside of the radiant tube thereby causing deflagration. In order to avoid such critical operating conditions, a flame operation with a minimum operating time may be determined for burner mode of operation after a previous cooling operation of a burner in a radiant tube. The duration of the minimum flame operating time after cooling operation may be determined based on radiant tube size and burner capacity or specified according to a specification by the burner manufacturer. In some example embodiments, the minimum operating time may comprise 30 seconds, or in a range between 10 and 50 seconds. Upon expiry of the minimum flame operating time after cooling operation may the computing entity 200 determine an estimated radiant tube temperature for determining burner operation in flame combustion operation or in flameless combustion operation. Determining flame operation after previous cooling operation of a burner is described in further detail in commonly owned U.S. Patent Application Publication No. 2023/0143249, entitled "SAFE START-UP OF A COOLED RADIANT TUBE BURNER AT HIGH TEMPERATURE OPERATION" which is herein incorporated by reference in its entirety.

In some embodiments, subsequent to step/operation 306, if the estimated radiant tube temperature is greater than or equal to the threshold temperature, the process proceeds to step/operation 310, where the computing entity 200 generates one or more control signals for flameless combustion operation. The one or more control signals may be provided to the one or more burners to cause the one or more burners to operate with flameless combustion within the one or more radiant tubes. In some embodiments, subsequent to step/operation 310, the computing entity 200 may continue to monitor the estimated radiant tube temperature (e.g., repeat steps/operations 302 through 306).

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

**Claims**

1. A furnace heating device comprising:

a furnace chamber comprising one or more zones;
one or more radiant tubes that are configured in the one or more zones;
one or more burners that are coupled to the one or more radiant tubes, wherein the one or more burners comprise a plurality of recuperator burners that are configured to operate with high air preheating;
one or more burner control units that are communicatively coupled to the one or more burners; and
a programmable controller that is communicatively coupled to the one or more burner control units, wherein the programmable controller is configured to:

determine one or more estimated radiant tube temperatures that respectively correspond to the one or more radiant tubes based on (i) a furnace chamber temperature signal that is representative of a furnace chamber temperature and (ii) one or more furnace and burner parameters that respectively correspond to the one or more radiant tubes,
generate one or more control signals based on the one or more estimated radiant tube temperatures with respect to a threshold temperature, wherein the one or more control signals instruct the one or more burners to operate in a flame combustion operation or a flameless combustion operation, and
provide the one or more control signals to the one or more burner control units.

2. The furnace heating device of claim 1 further comprising a furnace chamber thermocouple that is configured to:

measure the furnace chamber temperature;
generate the furnace chamber temperature signal based on the furnace chamber temperature; and
provide the furnace chamber temperature signal to the programmable controller.

3. The furnace heating device of claim 1 further comprising a control thermocouple that is configured to:

measure a temperature of a given radiant tube of the one or more radiant tubes; and
generate a control signal based on the temperature of the given radiant tube.

4. The furnace heating device of claim 3, wherein the programmable controller is further configured to determine the one or more estimated radiant tube temperatures based on the control signal.

5. The furnace heating device of claim 1, wherein the programmable controller is further configured to:

determine that the one or more estimated radiant tube temperatures are greater than or equal to a threshold temperature; and
generate the one or more control signals for operating the one or more burners in the flameless combustion operation based on the one or more estimated radiant tube temperatures are greater than or equal to the threshold temperature.

6. The furnace heating device of claim 1, wherein the programmable controller is further configured to:

determine that the one or more estimated radiant tube temperatures are less than a threshold temperature; and
generate the one or more control signals for operating the one or more burners in the flame combustion operation based on the one or more estimated radiant tube temperatures are less than the threshold temperature.

7. The furnace heating device of claim 1, wherein the one or more furnace and burner parameters comprise (i) a measured temperature of the furnace chamber, (ii) geometry and material construction of the one or more radiant tubes, (ii) capacity and adjusted excess air of the one or more burners, (iii) arrangement of the one or more radiant tubes in the furnace chamber and relatively to a material heated in the furnace chamber, or (v) a calculated temperature of the material.

8. A computer-implemented method comprising:

determining, by one or more processors, an estimated radiant tube temperature of a radiant tube based on a plurality of furnace and burner parameters;
monitoring, by the one or more processors, the estimated radiant tube temperature with respect to a threshold temperature;
generating, by the one or more processors, one or more first control signals that are associated with flame combustion operation based on the estimated radiant tube temperature being less than the threshold temperature; and
generating, by the one or more processors, one or more second control signals that are associated with flameless combustion operation based on the estimated radiant tube temperature being equal to or greater than the threshold temperature.

9. The computer-implemented method of claim 8, wherein the plurality of furnace and burner parameters are associated with radiant tube surface, radiant tube mass, furnace room temperature, or current burner capacity.

10. The computer-implemented method of claim 8, wherein determining the estimated radiant tube temperature further comprises determining a net burner capacity and a radiative heat transfer from a radiant tube.

11. The computer-implemented method of claim 8 further comprising modifying the estimated radiant tube temperature based on a control radiant tube temperature.

12. The computer-implemented method of claim 11 further comprising generating, based on the control radiant tube temperature, training data that are used to train or modify machine learning model parameters.

13. The computer-implemented method of claim 8 further comprising initializing the estimated radiant tube temperature to a furnace chamber temperature based on a restart or error condition.

14. The computer-implemented method of claim 8, wherein determining the estimated radiant tube temperature further comprises determining a flame operation with a minimum operating time.

15. One or more non-transitory computer-readable storage media including instructions that, when executed by one or more processors, cause the one or more processors to:

> determine an estimated radiant tube temperature based on a plurality of furnace and burner parameters;
> monitor the estimated radiant tube temperature with respect to a threshold temperature;
> generate one or more first control signals based on the estimated radiant tube temperature being less than the threshold temperature; and
> generate one or more second control signals based on the estimated radiant tube temperature being equal to or greater than the threshold temperature.

FIG. 1

FIG. 2

300

DETERMINE AN ESTIMATED RADIANT
TUBE TEMPERATURE BASED ON A
PLURALITY OF FURNACE AND BURNER
PARAMETERS
302

MODIFY THE ESTIMATED RADIANT TUBE
TEMPERATURE BASED ON A CONTROL
RADIANT TUBE TEMPERATURE
304

GENERATE ONE OR MORE CONTROL
SIGNALS FOR FLAME COMBUSTION
OPERATION
308

ESTIMATED
RADIANT TUBE
TEMPERATURE >/= THRESHOLD
TEMPERATURE
306

NO

YES

GENERATE ONE OR MORE CONTROL
SIGNALS FOR FLAMELESS COMBUSTION
OPERATION
310

FIG. 3

FIG. 4

FIG. 5

Europäisches
Patentamt
European
Patent Office
Office européen
des brevets

## EUROPEAN SEARCH REPORT

**Application Number**

EP 25 19 2076

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/157204 A1 (HONG JIANHUI [US] ET AL) 20 June 2013 (2013-06-20) * paragraph [0015] - paragraph [0026]; figures 1-7 * ----- | 1-15 | INV. F23C3/00 F23N5/02 |
| A | US 2019/120483 A1 (WÜNNING JOACHIM G [DE] ET AL) 25 April 2019 (2019-04-25) * paragraph [0023] - paragraph [0041]; figures 1-5 * ----- | 1-15 | |
| A | CA 2 595 703 A1 (FINA TECHNOLOGY [US]) 8 September 2006 (2006-09-08) * the whole document * ----- | 1-15 | |
| A | EP 3 923 110 A1 (SHANGHAI YIBAI SCIENCE AND TECH CO LTD [CN]) 15 December 2021 (2021-12-15) * the whole document * ----- | 1-15 | |
| | | | **TECHNICAL FIELDS SEARCHED (IPC)** F23C F23N |

The present search report has been drawn up for all claims

| Place of search | Date of completion of the search | Examiner |
|---|---|---|
| Munich | 14 December 2025 | Theis, Gilbert |

EPO FORM 1503 03.82 (P04C01)

## ANNEX TO THE EUROPEAN SEARCH REPORT
## ON EUROPEAN PATENT APPLICATION NO.

EP 25 19 2076

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2025

| Patent document cited in search report | | | Publication date | Patent family member(s) | | Publication date |
|---|---|---|---|---|---|---|
| US 2013157204 | A1 | | 20-06-2013 | US | 2013157204 A1 | 20-06-2013 |
| | | | | WO | 2013096646 A1 | 27-06-2013 |
| US 2019120483 | A1 | | 25-04-2019 | EP | 3242080 A1 | 08-11-2017 |
| | | | | JP | 7038665 B2 | 18-03-2022 |
| | | | | JP | 2019515229 A | 06-06-2019 |
| | | | | KR | 20190004706 A | 14-01-2019 |
| | | | | US | 2019120483 A1 | 25-04-2019 |
| | | | | WO | 2017191040 A1 | 09-11-2017 |
| CA 2595703 | A1 | | 08-09-2006 | CA | 2595703 A1 | 08-09-2006 |
| | | | | EP | 1856446 A2 | 21-11-2007 |
| | | | | TW | I373596 B | 01-10-2012 |
| | | | | US | 2006199127 A1 | 07-09-2006 |
| | | | | WO | 2006094057 A2 | 08-09-2006 |
| EP 3923110 | A1 | | 15-12-2021 | CN | 109947152 A | 28-06-2019 |
| | | | | EP | 3923110 A1 | 15-12-2021 |
| | | | | JP | 7037829 B2 | 17-03-2022 |
| | | | | JP | 2021521499 A | 26-08-2021 |
| | | | | TW | 202037867 A | 16-10-2020 |
| | | | | WO | 2020199324 A1 | 08-10-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230143249